# EUROPÄISCHE PATENTSCHRIFT

(11) **EP 3 957 965 B1**
(45) Veröffentlichungstag und Bekanntmachung des Hinweises auf die Patenterteilung: **03.09.2025**
(21) Anmeldenummer: 21186656.1
(22) Anmeldetag: 20.07.2021
(51) Int. Cl.: G01K 1/024, G01K 13/02

(54) **KABELLOSE FLUIDTEMPERATURERFASSUNG EINES MEHRWEGEVENTILS**
WIRELESS FLUID TEMPERATURE DETECTION IN A MULTIWAY VALVE
DÉTECTION SANS FIL DE LA TEMPÉRATURE DU FLUIDE D'UNE VANNE À VOIES MULTIPLES

(30) Priorität: 11.08.2020 DE 102020121056
(43) Veröffentlichungstag der Anmeldung: 23.02.2022
(73) Patentinhaber: WOCO Industrietechnik GmbH, 63628 Bad Soden-Salmünster (DE)
(72) Erfinder: Solazzo, Domenico, 67547 Worms (DE)
(74) Vertreter: Angerhausen, Christoph

(56) Entgegenhaltungen:
- EP-A1- 3 511 516
- JP-A- S60 168 974
- US-A1- 2016 258 820

## Beschreibung

Die vorliegende Erfindung betrifft ein Verfahren zum Erfassen der Temperatur einer Fluidströmung eines Stellventils. Ferner stellt die vorliegende Erfindung ein Stellventil, insbesondere Wegeventil, zum Einstellen einer Fluidströmung beispielsweise in einem Kraftfahrzeug bereit. Gattungsgemäße Stellventile kommen beispielsweise zum Einstellen, insbesondere Verteilen und/oder Mischen, von Prozessfluiden in Öl- und/oder Kühlkreisläufen insbesondere von Kraftfahrzeugen zum Einsatz.

Die Temperatur eines Prozessfluids, beispielsweise Kühlmittels oder Motoröls, hat einen wesentlichen Einfluss auf dessen Viskosität und die damit verbundenen Fließ-, Schmier-, Verschleiß und/oder Haltbarkeitseigenschaften der Fluide. Zudem ist die Fluidtemperatur häufig entscheidend für den bestimmungsgemäßen Einsatz der Fluide, beispielsweise zum Einstellen einer Betriebstemperatur eines Funktionsbauteils, wie eines Fahrzeugmotors. Das Einstellen einer vorbestimmten Fluidtemperatur hängt maßgeblich von einer zuverlässigen Messung der Fluidtemperatur ab.

Zum Erfassen bzw. Überwachen der Fluidtemperatur in einem Fluidkreislauf werden im Stand der Technik Temperatursensoren, insbesondere Temperaturfühler, eingesetzt, deren Messpunkte in direktem Kontakt mit dem Fluid stehen. Typischerweise besitzen entsprechende Temperaturfühler einen Messabschnitt aus einem temperaturempfindlichen Widerstand, der in einem Fluidkanal des Ventilgehäuses angeordnet ist, und einen außerhalb des Fluidkanals angeordneten Signalausgang mit einer elektronischen, kabelgebundenen Verbindung zu einer elektronischen Steuerung, beispielsweise eine Stellventil- oder Fahrzeugsteuerung. Die Steuerung empfängt und verarbeitet die Temperatursignale. Auf Basis der empfangenen Temperatursignale können Komponenten, die dem Fluidkreislauf zugeordnet sind, angesteuert werden. Die Temperatursensoren müssen insbesondere aufgrund ihrer Baugröße, Anschlussmaße und Kabelverbindungen zur elektronischen Steuerung bisher in einem Abstand vor und/oder hinter dem Stellglied des Stellventils in den Fluidkanal eingebracht werden, d.h. im Bereich eines Zulaufs in das Stellventil sowie im Bereich eines Ablaufs aus dem Stellventil.

Ein derartiges Thermostatventil ist aus DE 102014108603 A1 bekannt. DE 102014108603 A1 offenbart ein Thermostatventil zum Steuern der Zirkulation von Kühlwasser in einem Fahrzeug, welches in der Lage ist, durch Messen der Temperatur jeweilig vor bzw. nach den Ventilglied zu ermitteln, ob das Thermostatventil normal arbeitet oder nicht. Die Temperatursensoren sind über Gehäusedurchführungen in den Zulauf- bzw. Ablaufkanal eingebracht. Über einen Vergleich der Temperaturmesswerte von Zulauf-Temperatursensor und Ablauf-Temperatursensor kann auf einen Betriebszustand des Thermostatventils geschlossen werden. JPS60168974 A offenbart ein Stellventil mit einem Temperatursensor zum Bestimmen einer Fluid-Temperatur. Die Ventilöffnung wird in Abhängigkeit von, u.a., der Temperatur eingestellt.

Ein Nachteil der bekannten Temperaturerfassungen besteht darin, dass stets zwei Temperatursensoren notwendig sind, was unter anderem zu erhöhten Kosten führt. Des Weiteren wird das Messergebnis aufgrund der Differenzbildung aus den beiden Temperaturwerten verschlechtert. Ferner hat sich die kabelgebundene Signalübertragung zum einen aus Bauraumgründen und zum anderen aus Kostengründen als nachteilig erwiesen. Zudem wird die Temperaturerfassung durch Umgebungsbedingungen verfälscht, da Gehäusedurchführungen für mechanische bzw. elektronische Komponenten der Temperatursensoren notwendig sind, um diese dem Fluid aussetzen zu können. Eine Temperaturerfassung in einer Mischkammer oder Fluidkanalverzweigung, beispielsweise am Ventilsitz des Stellventils, ist im Stand der Technik nicht möglich.

Es ist Aufgabe der Erfindung, die Nachteile des Standes der Technik zu überwinden, insbesondere eine zuverlässigere und/oder kostengünstigere Fluidtemperaturerfassung in einem Stellventil zu ermöglichen.

Die Aufgabe wird durch die Gegenstände der unabhängigen Ansprüche gelöst.

Gemäß eines ersten Aspekts der vorliegenden Erfindung ist ein Verfahren zum Erfassen der Temperatur einer Fluidströmung eines Stellventils bereitgestellt. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide, in den Öl-, Wasser- oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, das heißt Ventilstellungen, des Stellglieds realisieren zu können.

Bei dem erfindungsgemäßen Verfahren wird ein temperatursensibler Widerstand, wie ein Thermistor, insbesondere ein Heißleiter, der Fluidströmung ausgesetzt. Der temperatursensible Widerstand ist derart eingerichtet, dass er in Anhängigkeit der Temperatur der Fluidströmung, beispielsweise des Kühlmittels, seine Temperatur und damit dessen Widerstand ändert. Die Temperatur-Widerstand-Kennlinie des temperatursensiblen Widerstands kann nichtlinear sein. Der temperatursensible Widerstand kann beispielsweise im Bereich eines Stellglieds zum Schließen und wenigstens teilweise Öffnen eines Fluidkanals des Stellventils und/oder im Bereich eines mit dem Stellglied kooperierenden Ventilsitzes angeordnet sein. Für den Fall, dass das Stellventil ein Wegeventil, insbesondere ein Mehrwegeventil, wie ein 3/2- oder ein 4/3-Wegeventil, ist, bei dem wenigstens zwei Fluideingänge in eine gemeinsame Mischkammer münden, von der aus wenigstens ein Fluidausgang sich erstreckt, kann der temperatursensible Widerstand im Bereich der Mischkammer angeordnet sein. Dass der temperatursensible Widerstand der Fluidströmung ausgesetzt wird, erfordert nicht notwendigerweise, dass der temperatursensible Widerstand in unmittelbaren Kontakt mit der Fluidströmung gelangt, also beispielsweise kein Gehäuse oder Ähnliches aufweisen darf. Darunter kann auch verstanden werden, dass der temperatursensible Widerstand beispielsweise von einem Gehäuse umgeben sein kann, in einer separaten Messkammer aufgenommen sein kann oder beispielsweise in das Stellventilgehäuse, insbesondere den Ventilsitz, oder das Stellglied integriert, insbesondere eingespritzt oder eingegossen, sein kann. Vielmehr ist darunter zu verstehen, dass der temperatursensible Widerstand derart angeordnet ist, dass er dazu in der Lage ist, die Fluidströmungstemperatur zu erfühlen, sodass er auf eine Veränderung der Fluidtemperatur reagieren kann, und/oder dass der temperatursensible Widerstand innerhalb eines einen Fluidkanal begrenzenden Stellventilgehäuses angeordnet ist, durch das die Fluidströmung geführt wird.

Ferner wird der temperatursensible Widerstand in einen Detektionsstromkreis integriert. Der Detektionsstromkreis kann beispielsweise Teil des elektromagnetischen Stellantriebs, insbesondere des Elektromotors, wie eines bürstenlosen Gleichstrommotors (BLDC), sein.

Erfindungsgemäß wird in Anhängigkeit der Fluidtemperatur ein Primärstromkreis des elektromagnetischen Stellantriebs, insbesondere des Elektromotors, von dem Detektionsstromkreis induktiv beeinflusst. Auf diese Weise ist es möglich, Energie kabellos beziehungsweise kontaktlos zu übertragen. Auf elektrische Verbindungskabel sowie Gehäusedurchführungen für die elektrischen Verbindungskabel kann verzichtet werden.

Daraus resultieren deutlich verringerte Kosten sowie eine bessere Dichtigkeit des Stellventils, beziehungsweise es entfällt die Notwendigkeit für aufwendige Abdichtungen im Bereich der Gehäusedurchführungen für die elektrischen Anschlusskabel. Durch die induktive Kopplung des Detektionsstromkreises insbesondere innerhalb des Stellventilgehäuses und des Primärstromkreises des elektromagnetischen Stellantriebs insbesondere außerhalb des Stellventilgehäuses induzieren die Stromkreise zueinander Änderungen im jeweils anderen Stromkreis, und zwar in Abhängigkeit der zu erfassenden Fluidtemperatur. Die Erfinder der vorliegenden Erfindung haben herausgefunden, dass die ohnehin vorhandenen Komponenten zum Stellen des Stellventils, nämlich die des elektromagnetischen Stellantriebs, zur Fluidtemperaturerfassung verwendet werden können. Beispielsweise kann es sich bei dem elektromagnetischen Stellantrieb um einen 3-Phasen-BLDC, einen sogenannten bürstenlosen Gleichstrommotor (Brushless DC Motor), handeln, bei dem stets eine Phase inaktiv ist, welche dann als Primärstromkreis fungieren kann und von dem aktiven Detektionsstromkreis innerhalb des Stellventilgehäuses induktiv beeinflusst werden kann.

In einer beispielhaften Ausführung des erfindungsgemäßen Verfahrens wird die induktive Beeinflussung des Primärstromkreises einer Fluidtemperatur zugeordnet. Die induktive Beeinflussung des Primärstromkreises kann eine Änderung dessen Magnetfeld und/oder dessen Stromstärke hervorrufen, welche Änderung einer Fluidtemperatur zugeordnet werden kann. Beispielsweise kann dies über eine Wertetabelle erfolgen. Dabei kann beispielsweise sichergestellt sein, dass die Stromkreise, insbesondere deren Spulen, eine konstante Lage zueinander aufweisen und/oder der Primärstromkreis, insbesondere dessen Spule, eine konstante Anregung von dem elektromagnetischen Stellantrieb erfährt.

Eine Änderung der Fluidtemperatur bewirkt eine Änderung des Widerstandswerts des temperatursensiblen Widerstands. Dies hängt damit zusammen, dass in Folge der Fluidtemperaturänderung sich die Temperatur des temperatursensiblen Widerstands ändert, wodurch sich entsprechend dessen Temperatur-Widerstand-Kennlinie dessen Widerstandswert ändert. Diese Widerstandsänderung kann dann in einer Änderung des Detektionsstromkreises, insbesondere dessen Magnetfelds oder dessen Stromstärke, resultieren. Aufgrund der bekannten Kennlinie des temperatursensiblen Widerstands und der herrschenden Stromstärke sowie des herrschenden Magnetfelds ist damit auch die Änderung im Detektionsstromkreis bekannt. Der Detektionsstromkreis kann beispielsweise ferner eine mit dem temperatursensiblen Widerstand gekoppelte, insbesondere in Reihe geschaltete, Detektionsspule aufweisen, die bei Stromfluss ein Magnetfeld hervorruft. Ändert sich der Widerstandswert des temperatursensiblen Widerstands verändert sich die Stromstärke an der Detektionsspule anliegenden Stroms, sodass sich das von der Detektionsspule hervorgerufene Magnetfeld ebenfalls verändert. Die Änderung des Magnetfelds des Detektionsstromkreises, insbesondere der Detektionsspule, induziert eine Änderung in dem Primärstromkreis, insbesondere in dessen Primärspule. Das Prinzip dahinter kann auf Basis der magnetischen Resonanz erfolgen. Als Folge der induktiven Beeinflussung des Primärstromkreises durch den Detektionsstromkreis kann eine Änderung des Magnetfelds an der Primärspule hervorgerufen werden, woraus sich eine Änderung des die Primärspule durchlaufenden Stroms, insbesondere der Primärstromstärke, ergibt. Diese Änderung wirkt sich unmittelbar auf den elektromagnetischen Stellantrieb aus. Beispielsweise muss eine Leistungs- und/oder Energieabgabeänderung am elektromagnetischen Stellantrieb erfolgen, um auf die veränderte, induzierte Stromstärke zu reagieren. Auf Basis der Leistungs- und/oder Energieabgabeänderung am elektromagnetischen Stellantrieb kann auf eine gewisse Fluidtemperatur rückgeschlossen werden. Diesbezüglich können Wertetabellen oder anderweitige Korrelationen angewendet werden.

Gemäß einer beispielhaften Weiterbildung des erfindungsgemäßen Verfahrens ändert sich in Folge der induktiven Beeinflussung des Primärstromkreises dessen Leistung und/oder Energieverbrauch. Die induktive Beeinflussung des Primärstromkreises durch den Detektionsstromkreis kann wie bereits erläutert eine veränderte Stromstärke bewirken. Um die Stromstärkenänderung auszugleichen, kann beispielsweise der elektromagnetische Stellantrieb über dessen Primärstromkreis gegenwirken, beispielsweise durch einen erhöhten oder erniedrigten Energieverbrauch beziehungsweise einer erhöhte oder erniedrigte Leistungsabgabe, je nachdem wie sich die Stromstärkenänderung auswirkt.

Gemäß einer weiteren beispielhaften Weiterbildung der vorliegenden Erfindung wird über die Leistungs- und/oder Energieverbrauchänderung des Primärstromkreises, insbesondere des elektromagnetischen Stellantriebs, auf eine Fluidtemperatur geschlossen. Dies kann durch Wertetabellen oder andere geeignete Korrelationsmaßnahmen erfolgen. Beispielsweise kann mittels einer Vorab-Initialisierung ein Korrelationsgraph oder eine Korrelationstabelle zwischen Leistungs- und/oder Energieverbrauchänderung und Fluidtemperatur erstellt werden. Diese Korrelation kann beispielsweise in einer Stellelektronik des Stellventils und/oder des Kraftfahrzeugs hinterlegt sein.

In einer weiteren beispielhaften Ausführung des erfindungsgemäßen Verfahrens wird die Fluidtemperatur kontinuierlich oder taktweise, insbesondere in vorbestimmten zeitlichen Abständen oder durch vorbestimmte Ereignisse, wie Stellventilbewegungen, insbesondere Stellventilinkremente oder Winkeländerungen, initiiert, überwacht. Beispielsweise kann eine Wertetabelle angelegt oder ein Graph erstellt werden. Beispielsweise kann auf Basis der Überwachung eine Steuerungs- und/oder Regelungsmaßnahme abgeleitet werden. Dabei ist es möglich, die erfasste und überwachte Fluidtemperatur mit Soll-Fluidtemperaturen zu vergleichen. Es können Grenzwerte für zulässige Abweichungen der Fluidtemperatur definiert werden. Ferner ist es möglich, anhand des Vergleichs von erfasster beziehungsweise überwachter Fluidtemperatur und Soll-Fluidtemperatur die Steuerungs- und/oder Regelungsmaßnahmen abzuleiten.

Gemäß einem nicht zum Anspruchsgegenstand gehörenden Beispiel, ist eine Einrichtung zum Erfassen der Temperatur einer Fluidströmung eines Stellventils, das einen elektromagnetischen Stellantrieb ausweist, bereitgestellt. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide, in den Öl-, Wasser- oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, das heißt Ventilstellungen, des Stellglieds realisieren zu können.

Die Einrichtung umfasst einen Detektionsstromkreis mit einem darin integrierten, der Fluidströmung ausgesetzten temperatursensiblen Widerstand, wie einem Thermistor, insbesondere einem Heißleiter. Der temperatursensible Widerstand kann derart eingerichtet sein, dass er in Anhängigkeit der Temperatur der Fluidströmung, beispielsweise des Kühlmittels, seine Temperatur und damit dessen Widerstand ändert. Die Temperatur-Widerstand-Kennlinie des temperatursensiblen Widerstands kann nichtlinear sein. Der temperatursensible Widerstand kann beispielsweise im Bereich eines Stellglieds zum Schließen und wenigstens teilweise Öffnen eines Fluidkanals des Stellventils und/oder im Bereich eines mit dem Stellglied kooperierenden Ventilsitzes angeordnet sein. Für den Fall, dass das Stellventil ein Wegeventil, insbesondere ein Mehrwegeventil, wie ein 3/2- oder ein 4/3-Wegeventil, ist, bei dem wenigstens zwei Fluideingänge in eine gemeinsame Mischkammer münden, von der aus wenigstens ein Fluidausgang sich erstreckt, kann der temperatursensible Widerstand im Bereich der Mischkammer angeordnet sein. Dass der temperatursensible Widerstand der Fluidströmung ausgesetzt wird, erfordert nicht notwendigerweise, dass der temperatursensible Widerstand in unmittelbaren Kontakt mit der Fluidströmung gelangt, also beispielsweise kein Gehäuse oder Ähnliches aufweisen darf. Darunter kann auch verstanden werden, dass der temperatursensible Widerstand beispielsweise von einem Gehäuse umgeben sein kann, in einer separaten Messkammer aufgenommen sein kann oder beispielsweise in das Stellventilgehäuse, insbesondere den Ventilsitz, oder das Stellglied integriert, insbesondere eingespritzt oder eingegossen, sein kann. Vielmehr ist darunter zu verstehen, dass der temperatursensible Widerstand derart angeordnet ist, dass er dazu in der Lage ist, die Fluidströmungstemperatur zu erfühlen, sodass er auf eine Veränderung der Fluidtemperatur reagieren kann, und/oder dass der temperatursensible Widerstand innerhalb eines einen Fluidkanal begrenzenden Stellventilgehäuses angeordnet ist, durch das die Fluidströmung geführt wird.

Ferner umfasst die Einrichtung Elektronik. Beispielsweise kann die Elektronik einen Mikroprozessor, wie einen Chip, umfassen. Die Elektronik kann ferner einen Speicher und/oder einen Prozessor umfassen.

Die Einrichtung ist dazu ausgelegt, den elektromagnetischen Stellantrieb induktiv zu beeinflussen. Die induktive Beeinflussung erfolgt demnach kontaktlos beziehungsweise kabellos, sodass eine konstruktiv einfache und/oder kostengünstige Lösung bereitgestellt ist. Auf diese Weise ist es möglich, Energie kabellos beziehungsweise kontaktlos zu übertragen. Auf elektrische Verbindungskabel sowie Gehäusedurchführungen für elektrische Verbindungskabel kann verzichtet werden. Daraus resultieren deutlich verringerte Kosten sowie eine bessere Dichtigkeit des Stellventils, beziehungsweise es entfällt die Notwendigkeit für aufwendige Abdichtungen im Bereich der Gehäusedurchführungen für die elektrischen Anschlusskabel. Durch die induktive Kopplung der Einrichtung mit dem elektromagnetischen Stellantrieb insbesondere außerhalb des Stellventilgehäuses können in Abhängigkeit der erfassenden Fluidtemperatur gegenseitige Änderungen der Leistung und/oder des Verbrauchs hervorgerufen werden, welche wiederum erfasst und einer Fluidtemperatur zugeordnet werden kann.

In einer beispielhaften Ausführung der Einrichtung ist die Elektronik dazu ausgelegt, die induktive Beeinflussung des elektromagnetischen Stellantriebs einer Fluidtemperatur zuzuordnen.

In einer weiteren beispielhaften Ausführung der Einrichtung weist der Detektionsstromkreis ferner eine Detektionsspule auf, mit der der temperatursensible Widerstand gekoppelt ist, insbesondere in Reihe geschaltet ist. Der Detektionsstromkreis kann so eingerichtet sein, dass ein durch die Detektionsspule fließender Strom ein Magnetfeld hervorruft, welches induktiv mit dem elektromagnetischen Stellantrieb gekoppelt sein kann, insbesondere diesen induktiv beeinflussen kann.

Gemäß einer weiteren beispielhaften Ausführung der Einrichtung ist der temperatursensible Widerstand derart ausgelegt, dass er seinen Widerstand in Folge einer Änderung der Fluidtemperatur verändert und die Leistung und/oder den Energieverbrauch der Detektionsspule verändert. Mit anderen Worten kann sich der Widerstandswert des temperatursensiblen Widerstands in Abhängigkeit der erfassten beziehungsweise erfühlten Fluidtemperatur entsprechend der Temperatur-Widerstand-Kennlinie des temperatursensiblen Widerstands verändern. Aufgrund der Widerstandsänderung geht eine Stromstärkenänderung einher, das heißt der an der Detektionsspule anliegende Strom, insbesondere dessen Stromstärke, verändert sich. Damit wird eine Veränderung des von der Detektionsspule erzeugten Magnetfelds erreicht. Eine Veränderung der Stromstärke der Detektionsspule bewirkt demnach eine Änderung der Leistung und/oder des Energieverbrauchs der Detektionsspule.

Gemäß einer weiteren beispielhaften Weiterbildung der Einrichtung ist die Detektionsspule derart induktiv mit dem elektromagnetischen Stellantrieb, insbesondere einer Primärspule des elektromagnetischen Stellantriebs gekoppelt, dass sich dessen Leistung und/oder Energieverbrauch ändern/ändert. Beispielsweise handelt es sich bei dem elektromagnetischen Stellantrieb um einen 3-Phasen bürstenlosen Gleichstrommotor (BLDC), bei dem der Primärstromkreis durch eine sogenannte Primärspule und den durch diese fließenden Strom, welcher von dem elektromagnetischen Stellantrieb erzeugt wird, umfassen.

In einer weiteren beispielhaften Ausführung der Einrichtung ist die Elektronik dazu eingerichtet, die Leistungs- und/oder Energieverbrauchänderung des elektromagnetischen Stellantriebs, insbesondere einer Primärspule des elektromagnetischen Stellantriebs, zu erfassen und einer Fluidtemperatur zuzuordnen. Die Zuordnung kann beispielsweise über Wertetabellen oder andere Korrelationsmaßnahmen erfolgen. Beispielsweise kann eine Vorab-Initialisierung des Stellventils beziehungsweise der Einrichtung erfolgen, um die Korrelation zu erfassen und/oder zu speichern.

Gemäß einer beispielhaften Weiterbildung der vorliegenden Erfindung ist die Elektronik dazu ausgelegt, die Fluidtemperatur zu überwachen. Alternativ oder zusätzlich kann die Elektronik an eine Überwachungselektronik gekoppelt sein. Entweder die Elektronik und/oder die Überwachungselektronik können dazu eingerichtet sein, Steuerungs- und/oder Regelungsmaßnahmen in Abhängigkeit der erfassten beziehungsweise überwachten Fluidtemperatur zu initialisieren beziehungsweise anzuzeigen. Die Elektronik oder die Überwachungselektronik kann einen Speicher und/oder einen Prozessor umfassen, welcher dazu ausgelegt ist, die Berechnungs- beziehungsweise Vergleichsberechnungen durchzuführen. Beispielsweise kann ein Vergleich der erfassten beziehungsweise überwachten Fluidtemperatur mit einer Soll-Fluidtemperatur erfolgen. Auf Basis des Vergleichs können Entscheidungen getroffen werden, ob ein kritischer oder fehlerhafter Zustand vorliegt.

Gemäß einem weiteren Aspekt der vorliegenden Erfindung, der mit den vorhergehenden Aspekten und beispielhaften Ausführungen kombinierbar ist, ist ein Stellventil, insbesondere ein Wegeventil, wie ein 3/2- oder ein 4/3-Wegeventil, zum Einstellen einer Fluidströmung beispielsweise eines Kraftfahrzeugs bereitgestellt. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide, in den Öl-, Wasser- oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, das heißt Ventilstellungen, des Stellglieds realisieren zu können.

Das erfindungsgemäße Stellventil umfasst ein Stellglied. Das Stellglied kann stellbar sein, insbesondere um einen Fluidkanal des Stellventils, durch den die Fluidströmung geleitet beziehungsweise geführt werden kann, zu schließen und/oder wenigstens teilweise zu öffnen. Das Stellventil kann bei Mehrwegeventilen zum Verteilen, Mischen und/oder Absperren der jeweiligen Prozessfluide, insbesondere Öl-, Wasser- oder Kühlmittelströmungen, eingesetzt werden.

Des Weiteren umfasst das Stellventil einen mit dem Stellventil gekoppelten elektromagnetischen Stellantrieb zum Aufbringen von Stellkräften. Die Kopplung von Stellglied und Stellantrieb kann kraft- und/oder formschlüssig sein. Beispielsweise handelt es sich bei dem elektromagnetischen Stellantrieb um einen Elektromotor, wie einen bürstenlosen Gleichstrommotor (BLDC).

Erfindungsgemäß umfasst das Stellventil eine nach einem der zuvor beschriebenen Aspekte beziehungsweise beispielhaften Ausführungen ausgebildete Einrichtung zum Erfassen der Temperatur der Fluidströmung des Stellventils. Insofern kann auf die diesbezüglichen Ausführungen verwiesen werden, die in analoger Weise für das Stellventil gelten.

Gemäß einem weiteren Aspekt der vorliegenden Erfindung, der mit den vorhergehenden Aspekten und beispielhaften Ausführungen kombinierbar ist, ist ein Stellventil, insbesondere Wegeventil, zum Einstellen einer Fluidströmung beispielsweise eines Kraftfahrzeugs bereitgestellt. Das Stellventil kann gemäß dem zuvor beschriebenen Aspekt ausgebildet sein. Gattungsgemäße Stellventile sind an einen Fluidkreislauf beispielsweise eines Kraftfahrzeugs angeschlossen. Beispielsweise kann es sich um einen Öl-, Wasser- oder Klimakreislauf eines Kraftfahrzeugs insbesondere im Motorbereich und/oder im Batteriebereich insbesondere bei elektromotorisch betriebenen Kraftfahrzeugen handeln. Das Stellventil dient dazu, Prozessfluide, in den Öl-, Wasser- oder Klimakreisläufen insbesondere von Kraftfahrzeugen einzustellen, insbesondere zu verteilen, zu mischen oder abzusperren. Gattungsgemäße Stellventile werden mittels eines elektromagnetischen Stellantriebs betätigt, um verschiedene Betriebszustände, das heißt Ventilstellungen, des Stellglieds realisieren zu können.

Das Stellventil umfasst ein Stellventilgehäuse mit wenigstens einem Fluidkanal. Der Fluidkanal kann einen Fluideingang, einen Fluidausgang sowie einen in Bezug auf die Fluidströmungsrichtung betrachteten dazwischen angeordneten Ventilraum umfassen. Der Ventilraum kann als derjenige Bereich innerhalb des Stellventilgehäuses bezeichnet werden, innerhalb dessen sich ein Stellglied zum Öffnen und/oder Schließen des Fluidkanals bewegen kann, insbesondere um eine Rotationsstellachse rotieren und/oder entlang einer translatorischen Translationsstellachse translatorisch verlagern kann.

Das erfindungsgemäße Stellventil umfasst ferner ein Stellglied, das in einem von dem Stellventilgehäuse begrenzten Ventilraum zum Öffnen und/oder Schließen des wenigstens einen Fluidkanals bewegbar ist. Zum Öffnen und/oder Schließen des Fluidkanals kann das Stellglied mit einem Ventilsitz kooperieren. Der Ventilsitz ist im Bereich des Ventilraums angeordnet beziehungsweise begrenzt diesen wenigstens abschnittsweise. Bei einem Mehrwegeventil, wie einem 3/2- oder 4/3-Mehrwegeventil, kann der Ventilraum eine Mischkammer ausbilden, in den wenigstens zwei Fluideingänge münden und von dem wenigstens ein Fluidausgang sich aus erstreckt. In der Mischkammer treffen demnach verschiedene Fluidströmungen aufeinander, die beispielsweise von unterschiedlichen Komponenten insbesondere des Kraftfahrzeugs, insbesondere des Kraftfahrzeugmotors oder von Batteriekomponenten, stammen können, aufeinander, sodass sich ein Mischfluid ergibt.

Erfindungsgemäß umfasst das Stellventil ferner eine insbesondere nach einem der zuvor beschriebenen Aspekte beziehungsweise beispielhaften Ausführungen ausgebildete Einrichtung zum Erfassen der Temperatur der Fluidströmung auf. Dabei ist die Einrichtung dazu eingerichtet, die Fluidtemperatur in dem Ventilraum, insbesondere in der Mischkammer, zu erfassen. Das bedeutet, dass die Einrichtung die Mischfluidtemperatur erfassen kann. Die Erfinder der vorliegenden Erfindung haben herausgefunden, dass die Mischfluidtemperatur sich besonders gut dazu eignet, Rückschlüsse auf die Funktionsfähigkeit des Stellventils ziehen zu können. Beispielsweise kann durch die Erfassung der Mischfluidtemperatur erfasst und/oder überwacht werden, wie sich in Abhängigkeit von verschiedenen Stellgliedstellungen die verschiedenen Fluidströmungen vermischen.

In einer beispielhaften Ausführung des erfindungsgemäßen Stellventils umfasst das Stellventil ferner einen elektromagnetischen Stellantrieb mit einer Primärspule, die in einen Primärstromkreis zum Stellen des Stellglieds integriert ist. Der elektromagnetische Stellantrieb umfasst ferner eine Detektionsspule, die in einen Detektionsstromkreis zum Erfassen der Fluidtemperatur integriert ist. Der Detektionsstromkreis umfasst einen der Fluidströmung ausgesetzten temperatursensiblen Widerstand, wie einen Thermistor, insbesondere einen Heißleiter. Der temperatursensible Widerstand kann eine vorbestimmte Widerstand-Temperatur-Kennlinie aufweisen. Es sei klar, dass der temperatursensible Widerstand nicht unmittelbar in Kontakt mit der Fluidströmung sein muss. Es ist ausreichend, dass der temperatursensible Widerstand so angeordnet ist, dass dieser seine Temperatur in Abhängigkeit der Fluidtemperatur, insbesondere der Mischfluidtemperatur, verändert. Gemäß einer beispielhaften Weiterbildung ist der Detektionsstromkreis dazu ausgelegt, in Abhängigkeit der Fluidtemperatur den Primärstromkreis induktiv zu beeinflussen. In Bezug auf die induktive Beeinflussung kann auf die vorhergehenden Ausführungen in Bezug auf die Einrichtung oder das Verfahren verwiesen werden, deren - Ausführungen in Bezug auf das Stellventil übertragbar sind.

In einer weiteren beispielhaften Ausführung des erfindungsgemäßen Stellventils umfasst die Einrichtung einen Detektionsstromkreis mit einer Detektionsspule und einen mit der Detektionsspule gekoppelten, der Fluidströmung ausgesetzten temperatursensiblen Widerstand, wie einen Thermistor, insbesondere einen Heißleiter. Die Detektionsspule und/oder der temperatursensible Widerstand sind/ist fest an dem Stellglied oder an dem Stellventilgehäuse, insbesondere einem mit dem Stellglied kooperierenden Ventilsitz, in dem Fluidkanal befestigt. Beispielsweise sind/ist die Detektionsspule und/oder der temperatursensible Widerstand von dem Material des Stellglieds umspritzt oder umgossen. Die Spule, die Detektionsspule und der thermosensible Widerstand können über ein Anschlusskabel miteinander gekoppelt sein.

Die vorliegende Erfindung betrifft auch ein Leitungssystem für ein Kraftfahrzeug, insbesondere zum Kühlen eines Motors oder zum Bereitstellen eines Anoden- und/oder Kathodenstroms in einer Brennstoffzelle, mit einem Stellventil gemäß einem der zuvor beschriebenen Aspekte beziehungsweise beispielhaften Ausführungen.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1:: eine schematische Prinzipskizze eines gattungsgemäßen Stellventils gemäß Stand der Technik;
- Figur 2:: eine schematische Schnittansicht einer beispielhaften Ausführung eines erfindungsgemäßen Stellventils; und
- Figur 3:: eine schematische Darstellung eines Ausschnittes des Stellventils aus Figur 2 zur Veranschaulichung der Fluidtemperaturerfassung.

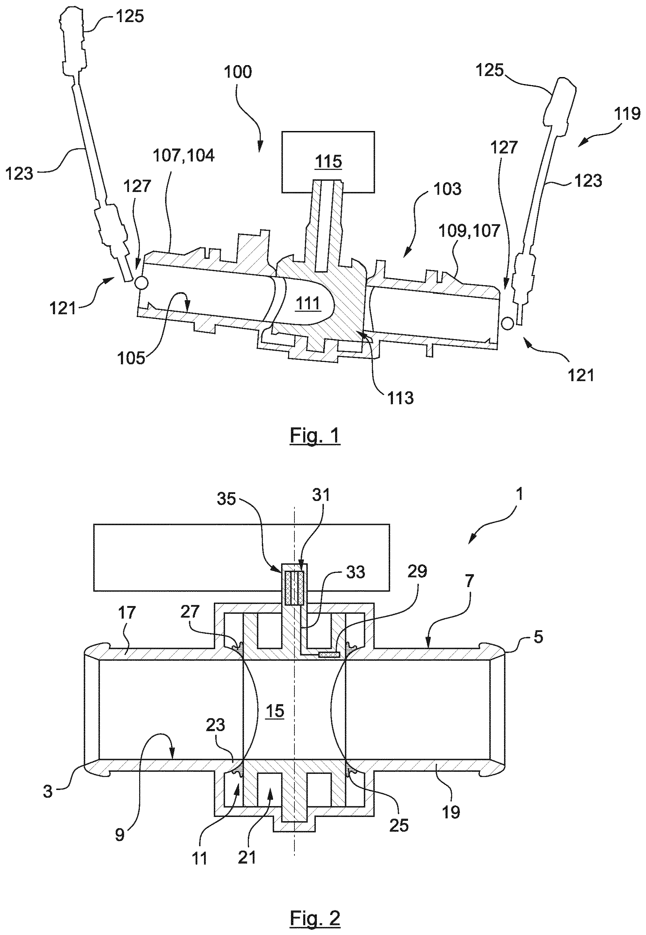

In der folgenden Beschreibung beispielhafter Ausführungen der vorliegenden Erfindung, anhand der beiliegenden Figuren ist ein erfindungsgemäßes Stellventil im Allgemeinen mit der Bezugsziffer 1 versehen. Gattungsgemäße Stellventile 1 werden beispielsweise zum Thermomanagement in Kraftfahrzeugen eingesetzt und dienen beispielsweise dazu, Prozessfluide, wie Öle, Wasser und/oder Kühlmittel, zu verteilen, zu mischen und/oder abzusperren. Bei dem in Figur 2 dargestellten erfindungsgemäßen Stellventil 1 kann es sich beispielsweise um ein Absperrventil mit einem Fluideingang 3 und einem Fluidausgang 5 oder um ein Wegeventil, insbesondere ein Mehrwegeventil, wie ein 3/2- oder 4/3-Mehrwegeventil, handeln, bei dem nur ein Fluidkanal ersichtlich ist.

Bezugnehmend auf Figur 1 ist ein gattungsgemäßes Stellventil 100 gemäß Stand der Technik schematisch abgebildet. Das Stellventil 100 umfasst ein Ventilgehäuse 103, das einen Fluidkanal 105 begrenzt, durch den eine Prozessfluidströmung hindurch leitbar ist. Insbesondere ist der Fluidkanal 105 von einem Fluideingang 107, 109 und einem Fluidausgang 109, 107 begrenzt. In Strömungsrichtung betrachtet zwischen Fluidein- und Fluidausgang 107, 109 befindet sich ein Ventilraum 111, in dem das als Drehkolben ausgebildete Stellglied 113 angeordnet ist. Das Drehkolben-Ventilglied 113 ist zwischen verschiedenen Rotationsstellungen stellbar, um verschiedene Durchflussszenarien zu realisieren. Das Stellglied 113 wird von einem schematisch angedeuteten Stellantrieb 115 betätigt.

Das Stellventil 100 umfasst ferner eine Temperaturerfassungseinrichtung. Die Temperaturerfassungseinrichtung umfasst zwei im Wesentlichen identisch ausgebildete Temperaturerfassungserfassungsabschnitte 117, 119, die jeweils eine Fluidtemperatur messen. Dabei ist eine in Bezug auf die Fluidströmungsrichtung stromaufwärts angeordnete Messeinrichtung 117, 119 im Bereich des Fluideingangs 107, 109 angeordnet, während die andere in Fluidströmungsrichtung betrachtet stromabwärts angeordnete Temperaturerfassungsabschnitt 119, 117 im Bereich des Fluidausgangs 109, 107 angeordnet ist. Jeder Temperaturerfassungsabschnitt 117, 119 umfasst einen dem Fluid ausgesetzten Temperaturfühler 121, der jeweils über ein elektrisches Verbindungskabel 123 mit einer elektrischen Kopplungsstelle 125 zum Verbinden mit einer elektrischen Steuerung, beispielsweise einer Stellventil- oder Kraftfahrzeugsteuerung, verbunden ist. Zur Durchführung der Kabel und/oder Temperaturfühler 191, 123 aus dem Fluidkanal 105 in die Umgebung weist das Fluid 103, insbesondere der Fluideingang 107, 109 und der Fluidausgang 109, 107 schematisch mittels der Bezugszeichen 127 angeordnete Durchführungen aus. Die Temperaturerfassungseinrichtung ermittelt somit einen Temperaturwert im Bereich des Fluideingangs 107, 109 und einen Temperaturwert im Bereich des Fluidausgangs 109, 107 durch einen Vergleich der beiden Temperaturwerte kann der Betrieb des Stellventils kontrolliert werden.

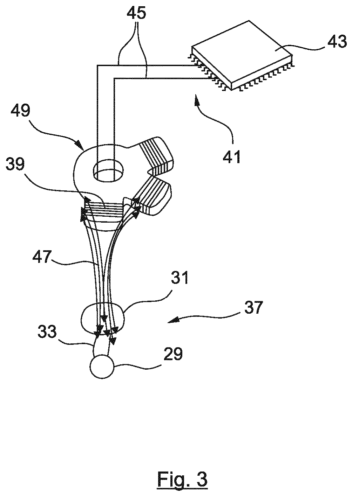

Bezugnehmend auf die Figuren 2 und 3 wird der Aufbau und die Funktionsweise einer beispielhaften Ausführung eines erfindungsgemäßen Stellventils 1 näher erläutert. Das erfindungsgemäße Stellventil 1 umfasst grundsätzlich ein Stellventilgehäuse 7, das einen Fluidkanal 9 begrenzt, durch den die Prozessfluidströmung hindurch leitbar ist, und ein Stellglied 11, das zum wenigstens teilweise Öffnen und/oder Schließen des Fluidkanals 9 mittels eines elektromagnetischen Stellantriebs 13, wie eines Elektromotors, insbesondere eines bürstenlosen Gleichstrommotors (BLDC), betätigbar ist. Das in Figur 2 als Drehkolben ausgebildete Stellglied 11 umfasst wenigstens eine Durchgangsbohrung 15, über die der Fluideingang 3 mit dem Fluidausgang 5 fluidal in Verbindung gebracht werden kann, um wenigstens teilweise eine Prozessfluidströmung durch das Stellventil 1 hindurch zu gestatten.

Der Fluidkanal 9 erstreckt sich im Wesentlichen geradlinig durch das Ventilgehäuse 7 hindurch. Ein zwischen einem rohrförmigen Gehäuseabschnitt 17, der den Fluidkanal 9 im Fluideingangsbereich 3 begrenzt, und einem rohrförmigen Gehäuseabschnitt 19, der den Fluidkanal 9 im Fluidausgangsbereich 5 begrenzt, befindet sich ein Ventilraum 21 und in dem Ventilraum ist das Stellglied 11 zum Realisieren der unterschiedlichen Durchflussszenarien bewegbar, insbesondere rotierbar. Für den Fall, dass das Stellventil 1 als Mehrwegeventil ausgebildet ist, bildet der Ventilraum 21 gleichzeitig eine sogenannte Mischkammer, in welche wenigstens zwei Prozessfluideingänge 3 münden und aus welcher sich wenigstens 1 Prozessfluidausgang 5 heraus erstreckt. Dies bedeutet, dass in der Mischkammer 21 eine Vermischung der einströmenden Prozessfluide erfolgen kann. Über den Fluidausgang 5 kann dann das Mischfluid abgegeben werden. Zum Schließen und/oder Freigeben des Fluidkanals 9 kooperiert das Ventilglied 11 mit einem Ventilsitz 23, der Teil des Fluidgehäuses 7 ist. Zur Erhöhung der Dichtwirkung können Abdichtelemente 25, 27 eingesetzt werden, wie O-Ring-Dichtungen.

Durch die erfindungsgemäße Temperaturerfassung ist es möglich, im Bereich des Ventilraums 21 beziehungsweise der Mischkammer 21 die Fluidtemperatur, insbesondere die Mischfluidtemperatur, zu erfassen und zu überwachen. Die Temperaturerfassung beziehungsweise -überwachung erfolgt folgendermaßen: in das Material des Ventilglieds 11 sind ein temperatursensibler Widerstand 29, wie ein Thermistor oder ein Heißleiter, sowie eine Detektionsspule 31 und ein die Detektionsspule 31 mit dem temperatursensiblen Widerstand 29 verbindendes elektrisches Verbindungskabel 33 umspritzt beziehungsweise eingegossen. Der temperatursensible Widerstand 29 ist dabei derart angeordnet, dass er zumindest im geöffneten Zustand des Stellventils 1 derart von der Prozessfluidströmung umströmt wird, dass dieser die Prozessfluidtemperatur erfasst beziehungsweise erfühlen kann. Mit anderen Worten kann die Temperatur des strömenden Fluids eine Temperaturänderung des temperatursensiblen Widerstands 29 bewirken. Durch die Detektionsspule 31, die Teil eines Detektionsstromkreises 37 (Figur 3) ist, kann ein Strom fließen, der ein magnetisches Feld der Detektionsspule 31 bewirkt. Grundsätzlich kann das Ventilglied 7 über eine Lagerung, wie ein Rotationslager 35, rotatorisch in dem elektromagnetischen Stellantrieb 13 gelagert sein. Die von dem elektromagnetischen Stellantrieb 13 bereitgestellte Stellantriebskraft kann in eine Drehbewegung des Stellglieds 11 zum Verstellen des Stellglieds 13 umgewandelt werden.

Innerhalb des Detektionsstromkreises 37 (Figur 3) kann die Detektionsspule 31 mit dem thermosensiblen Widerstand 29 in Reihe geschalten sein. Ändert sich der Widerstandswert des thermosensiblen Widerstands 29 entsprechend seiner Temperatur-Widerstands-Kennlinie in Abhängigkeit der Temperatur des strömenden Fluids, welche die Temperatur am beziehungsweise des temperatursensiblen Widerstands 29 beeinflusst, wird eine Änderung im Detektionsstromkreis 37 hervorgerufen. Insbesondere ändert sich die anliegende Stromstärke, die wiederum das induzierte Magnetfeld der Detektionsspule 31 beeinflusst beziehungsweise ändert. Aufgrund der induktiven Kopplung der Detektionsspule 31 mit einer Primärspule 39 (Figur 3) eines Primärstromkreises 41 des elektromagnetischen Stellantriebs 13 kann die Detektionsspule 31 die Primärspule 39 induktiv beeinflussen. Die erfindungsgemäße Temperaturerfassungseinrichtung beziehungsweise das erfindungsgemäße Stellventil 1 ist dazu in der Lage, anhand der induktiven Beeinflussung von Detektions- und Primärspule 31, 39 auf eine Fluidtemperatur zu schließen.

Zur Funktionsweise der Temperaturerfassung sei auf die vorhergehende ausführliche Beschreibung verwiesen. In Figur 3 ist schematisch eine elektrische Leiterplatte 43 gezeigt, welche über elektrische Verbindungen 45 mit in dem Primärstromkreis integriert ist. In elektrischer Verbindung mit dem Primärstromkreis 41 ist ferner eine Rotor-Stator-Einheit 49 zur Stellkrafterzeugung. Wie in Figur 3 abgebildet ist, kann es sich beispielsweise um einen 3-Phasen-Gleichstrommotor, wie einen bürstenlosen Gleichstrommotor (BLDC), handeln.

Davon separat und nicht durch Kabel oder dergleichen verbunden ist der Detektionsstromkreis 37 angeordnet, der sich im Bereich des Fluidgehäuses 7 befindet (siehe Figur 2). In Figur 3 ist die schematische induktive Beeinflussung von Primärstromkreis 41 und Detektionsstromkreis 37 anhand der Doppelpfeile 47 angedeutet. Die Detektionsspule 31 und die Primärspule 39 induzieren zueinander Änderungen im Stromfluss in der jeweils anderen Spule, sodass aufgrund der bekannten Relativlage der Spulen zueinander sowie der bekannten Anregung über den elektromagnetischen Stellantrieb 13 eine Leistungs- und/oder Energieverbrauchänderung am elektromagnetischen Stellantrieb 3 erfasst, insbesondere überwacht, werden kann. Des Weiteren kann aufgrund der bekannten Zusammenhänge zwischen Leistung beziehungsweise Energieabgabe und den bekannten Komponenten des elektromagnetischen Stellantriebs 13 eine Korrelation zwischen Fluidtemperatur und Energieabgabe- beziehungsweise Leistungsänderung erfasst und überwacht werden.

Die Erfindung ermöglicht es daher, kontaktfrei und kabellos die Fluidtemperatur selbst im Ventilraum 21 beziehungsweise in der Mischkammer 21 zu erfassen und zu überwachen, ohne dass dabei auf Gehäusedurchführungen, wie aufwendige Abdichtungen und extra Herstellungsschritte erfordern, zurückgegriffen werden muss. Die Erfinder der vorliegenden Erfindung haben herausgefunden, dass unter Ausnutzung der magnetischen Induktion und der Kenntnis der Charakteristika des eingesetzten elektromagnetischen Stellantriebs kostengünstig und messgenau die Fluidtemperatur selbst im Mischkammerbereich erfasst und überwacht werden kann.

### BEZUGSZEICHENLISTE

- 1, 100: Stellventil
- 3, 107: Fluideingang
- 5, 109: Fluidausgang
- 9, 105: Fluidkanal
- 7, 103: Stellventilgehäuse
- 11, 113: Stellglied
- 13, 115: Elektromagnetischer Stellantrieb
- 15: Fluidbohrung
- 17, 19: Rohrförmiger Gehäuseabschnitt
- 21, 111: Ventilraum
- 23: Ventilsitz
- 25, 27: Dichtung
- 29, 121: Temperatursensibler Wiederstand
- 33, 123: Elektrisches Verbindungskabel
- 31: Detektionsspule
- 35: Lagerung
- 37: Detektionsstromkreis
- 39: Primärspule
- 41: Primärstromkreis
- 43: Leiterplatte
- 45: Elektrische Verbindung
- 47: Induktive Beeinflussung
- 49: Rotor-Stator-Einheit
- 117, 119: Temperaturerfassungsabschnitt
- 125: Elektrische Kopplungsstelle
- 127: Gehäusedurchgang

## Patentansprüche

1. Verfahren zum Erfassen der Temperatur einer Fluidströmung eines Stellventils, das einen elektromagnetischen Stellantrieb (13) aufweist, bei dem:
- ein temperatursensibler Widerstand (29), wie ein Thermistor, insbesondere ein Heißleiter, der Fluidströmung ausgesetzt wird; **dadurch gekennzeichnet, dass**
- der temperatursensible Widerstand (29) in einen Detektionsstromkreis (37) integriert wird; und
- in Abhängigkeit der Fluidtemperatur ein Primärstromkreis (41) des elektromagnetischen Stellantriebs von dem Detektionsstromkreis (37) induktiv beeinflusst wird.

2. Verfahren nach Anspruch 1, bei dem die induktive Beeinflussung des Primärstromkreises einer Fluidtemperatur zugeordnet wird.

3. Verfahren nach Anspruch 2, bei dem infolge der induktiven Beeinflussung des Primärstromkreises sich dessen Leistung und/oder Energieverbrauch ändert.

4. Verfahren nach Anspruch 3, bei dem über die Leistungs- und/oder Energieverbrauchänderung auf eine Fluidtemperatur geschlossen wird.

5. Verfahren nach einem der Ansprüche 2 bis 4, bei dem die Fluidtemperatur kontinuierlich oder taktweise überwacht wird, wobei insbesondere auf Basis der Überwachung Steuerungs- und/oder Regelungsmaßnahmen abgeleitet werden.

6. Stellventil (1), insbesondere Wegeventil, zum Einstellen einer Fluidströmung beispielsweise eines Kraftfahrzeugs, umfassend:
- ein Stellglied; und
- einen mit dem Stellglied gekoppelten elektromagnetischen Stellantrieb (13) zum Aufbringen von Stellkräften, der einen Primärstromkreis (41) aufweist; **gekennzeichnet durch**
- eine Einrichtung zum Erfassen der Temperatur einer Fluidströmung des Stellventils, umfassend einen Detektionsstromkreis (37) mit einem darin integrierten, der Fluidströmung ausgesetzten temperatursensiblen Widerstand (29), wie einem Thermistor, insbesondere einem Heißleiter, und Elektronik, wobei in Abhängigkeit der Fluidtemperatur der Primärstromkreis (41) des elektromagnetischen Stellantriebs (13) induktiv beeinflusst wird.

7. Stellventil (1) nach Anspruch 6, ferner umfassend:
- ein Stellventilgehäuse (7) mit wenigstens einem Fluidkanal;
- wobei das Stellglied in einem von dem Stellventilgehäuse (7) begrenzten Ventilraum (21) zum Öffnen und/oder Schließen des wenigstens einen Fluidkanals (21) bewegbar ist;
- wobei die Einrichtung dazu eingerichtet ist, die Fluidtemperatur in dem Ventilraum (21) zu erfassen.

8. Stellventil (1) nach Anspruch 6 oder 7, wobei der elektromagnetische Stellantrieb (13) eine Primärspule (39), die in einen Primärstromkreis (41) zum Stellen des Stellglieds integriert ist, und eine Detektionsspule (31) aufweist, die in den Detektionsstromkreis (37) zum Erfassen der Fluidtemperatur integriert ist, der einen der Fluidströmung ausgesetzten temperatursensiblen Widerstand (29), wie einen Thermistor, insbesondere einen Heißleiter, aufweist, wobei insbesondere der Detektionsstromkreis (37) dazu ausgelegt ist, in Abhängigkeit der Fluidtemperatur den Primärstromkreis (41) induktiv zu beeinflussen.

9. Stellventil (1) nach einem der Ansprüche 6 bis 8, wobei die Einrichtung den Detektionsstromkreis (37) mit einer Detektionsspule (31) und dem mit der Detektionsspule (31) gekoppelten, der Fluidströmung ausgesetzten temperatursensiblen Widerstand (29), wie ein Thermistor, insbesondere einen Heißleiter, aufweist, wobei die Detektionsspule (31) und/oder der temperatursensible Widerstand (29) fest an dem Stellglied oder an dem Stellventilgehäuse, insbesondere einem Ventilsitz, in dem Fluidkanal (21) befestigt sind/ist.

10. Stellventil (1) nach einem der Ansprüche 6 bis 9, wobei die Elektronik dazu ausgelegt ist, die induktive Beeinflussung des elektromagnetischen Stellantriebs einer Fluidtemperatur zuzuordnen.

11. Stellventil (1) nach einem der Ansprüche 6 bis 10, wobei der Detektionsstromkreis (37) ferner eine Detektionsspule (31) aufweist, mit der der temperatursensible Widerstand (29) in Reihe geschaltet ist.

12. Stellventil (1) nach einem der Ansprüche 6 bis 11, wobei die Detektionsspule (31) derart induktiv mit dem elektromagnetischen Stellantrieb, insbesondere einer Primärspule (39) des elektromagnetischen Stellantriebs, gekoppelt ist, dass sich dessen Leistung und/oder Energieverbrauch ändert.

13. Stellventil (1) nach einem der Ansprüche 6 bis 12, wobei die Elektronik dazu ausgelegt ist, die Leistungs- und/oder Energieverbrauchänderung des elektromagnetischen Stellantriebs, insbesondere einer Primärspule (39) des elektromagnetischen Stellantriebs, zu erfassen und einer Fluidtemperatur zuzuordnen.

14. Stellventil (1) nach einem der Ansprüche 6 bis 13, wobei die Elektronik dazu ausgelegt ist, die Fluidtemperatur zu überwachen, und/oder an eine Überwachungselektronik gekoppelt ist.

## Claims

1. Method for detecting the temperature of a fluid flow of a control valve which has an electromagnetic actuator (13), in which method:
- a temperature-sensitive resistor (29), such as a thermistor, in particular a thermistor, is exposed to the fluid flow; **characterized in that**
- the temperature-sensitive resistor (29) is integrated into a detection circuit (37); and
- a primary circuit (41) of the electromagnetic actuator is influenced inductively by the detection circuit (37) as a function of the fluid temperature.

2. Method according to claim 1, in which the inductive influencing of the primary circuit is assigned to a fluid temperature.

3. Method according to claim 2, in which the power and/or energy consumption of the primary circuit changes as a result of the inductive influencing of the primary circuit.

4. Method according to claim 3, in which a fluid temperature is inferred via the change in power and/or energy consumption.

5. Method according to one of claims 2 to 4, in which the fluid temperature is monitored continuously or cyclically, wherein control and/or regulation measures are derived in particular on the basis of the monitoring.

6. Control valve (1), in particular directional control valve, for adjusting a fluid flow, for example of a motor vehicle, comprising:
- an actuator; and
- an electromagnetic actuator (13) which is coupled to the actuator and has a primary circuit (41) for applying actuating forces; **characterized by**
- a device for detecting the temperature of a fluid flow of the control valve, comprising a detection circuit (37) with a temperature-sensitive resistor (29), such as a thermistor, in particular a thermistor, which is integrated in said detection circuit and is exposed to the fluid flow, and electronics, wherein the primary circuit (41) of the electromagnetic actuator (13) is influenced inductively as a function of the fluid temperature.

7. Control valve (1) according to claim 6, further comprising:
- a control valve housing (7) with at least one fluid duct;
- wherein the actuator is movable in a valve chamber (21) delimited by the control valve housing (7) for opening and/or closing the at least one fluid duct (21);
- wherein the device is configured to detect the fluid temperature in the valve chamber (21).

8. Control valve (1) according to claim 6 or 7, wherein the electromagnetic actuator (13) has a primary coil (39) which is integrated in a primary circuit (41) for actuating the actuator, and a detection coil (31) which is integrated in the detection circuit (37) for detecting the fluid temperature, said detection circuit having a temperature-sensitive resistor (29), such as a thermistor, in particular a thermistor, which is exposed to the fluid flow, wherein in particular the detection circuit (37) is designed to influence the primary circuit (41) inductively as a function of the fluid temperature.

9. Control valve (1) according to one of claims 6 to 8, wherein the device has the detection circuit (37) with a detection coil (31) and the temperature-sensitive resistor (29), such as a thermistor, in particular a thermistor, which is coupled to the detection coil (31) and is exposed to the fluid flow, wherein the detection coil (31) and/or the temperature-sensitive resistor (29) are/is fastened fixedly to the actuator or to the control valve housing, in particular a valve seat, in the fluid duct (21).

10. Control valve (1) according to one of claims 6 to 9, wherein the electronics are designed to assign the inductive influencing of the electromagnetic actuator to a fluid temperature.

11. Control valve (1) according to one of claims 6 to 10, wherein the detection circuit (37) further has a detection coil (31) to which the temperature-sensitive resistor (29) is connected in series.

12. Control valve (1) according to one of claims 7 to 11, wherein the detection coil (31) is coupled inductively to the electromagnetic actuator, in particular a primary coil (39) of the electromagnetic actuator, in such a way that the power and/or energy consumption thereof changes.

13. Control valve (1) according to one of claims 6 to 12, wherein the electronics are designed to detect the change in power and/or energy consumption of the electromagnetic actuator, in particular a primary coil (39) of the electromagnetic actuator, and to assign said change to a fluid temperature.

14. Control valve (1) according to one of claims 6 to 13, wherein the electronics are designed to monitor the fluid temperature and/or are coupled to monitoring electronics.

## Revendications

1. Procédé pour détecter la température d'un écoulement de fluide d'une soupape de régulation qui comporte un actionneur électromagnétique (13), dans lequel :
une résistance sensible à la température (29), telle qu'une thermistance,
en particulier un conducteur chauffant, est exposée à l'écoulement de fluide ; **caractérisé en ce que**
la résistance sensible à la température (29) est intégrée dans un circuit de détection (37) ; et
en fonction de la température du fluide, un circuit principal (41) de
l'actionneur électromagnétique est influencé de manière inductive par le circuit de détection (37).

2. Procédé selon la revendication 1, dans lequel l'influence inductive du circuit principal est associée à une température de fluide.

3. Procédé selon la revendication 2, dans lequel sa puissance et/ou sa consommation d'énergie du circuit principal varie sous l'effet de l'influence inductive.

4. Procédé selon la revendication 3, dans lequel la température d'un fluide est déduite de la variation de puissance et/ou de consommation d'énergie.

5. Procédé selon l'une des revendications 2 à 4, dans lequel la température du fluide est surveillée en continu ou par intervalles, des mesures de commande et/ou de régulation étant notamment dérivées des opérations de surveillance.

6. Soupape de régulation (1), en particulier soupape de distribution, pour régler un écoulement de fluide, par exemple dans un véhicule automobile, comprenant :
- un organe de réglage ; et
- un actionneur électromagnétique (13) couplé à l'organe de réglage pour appliquer des forces de réglage, qui comporte un circuit principal (41) ; **caractérisé par** un dispositif pour détecter la température d'un écoulement de fluide de la soupape de régulation, comprenant un circuit de détection (37) avec une résistance sensible à la température (29) telle qu'une thermistance, en particulier un conducteur chauffant intégrée à celui-ci et un élément électronique, le circuit principal (41) de l'actionneur électromagnétique (13) étant influencé de manière inductive en fonction de la température du fluide.

7. Soupape de régulation (1) selon la revendication 6, comprenant en outre :
- un boîtier de soupape de régulation (7) avec au moins un canal de fluide ;
- l'actionneur étant mobile dans une chambre de soupape (21) délimitée par le boîtier de soupape de régulation (7) pour ouvrir et/ou fermer le au moins un canal de fluide (21) ;
- le dispositif étant conçu pour détecter la température du fluide dans la chambre de soupape (21).

8. Soupape de régulation (1) selon la revendication 6 ou 7, l'actionneur électromagnétique (13) comportant une bobine principale (39) intégrée dans un circuit principal (41) pour actionner l'organe de réglage, et une bobine de détection (31) intégrée dans le circuit de détection (37) pour détecter la température du fluide, qui comporte une résistance sensible à la température (29), telle qu'une thermistance, en particulier un conducteur chauffant à résistance variable, exposée à l'écoulement du fluide, le circuit de détection (37) étant notamment conçu pour influencer de manière inductive le circuit principal (41) en fonction de la température du fluide.

9. Soupape de régulation (1) selon l'une des revendications 6 à 8, le dispositif comportant le circuit de détection (37) avec une bobine de détection (31) et la résistance sensible à la température (29), telle qu'une thermistance, en particulier un conducteur chauffant, couplée à la bobine de détection (31) et exposée à l'écoulement du fluide, la bobine de détection (31) et/ou la résistance sensible à la température (29) étant placée(s) de manière fixe sur l'organe de réglage ou sur le boîtier de la soupape de régulation, en particulier sur un siège de soupape, dans le canal de fluide (21).

10. Soupape de régulation (1) selon l'une des revendications 6 à 9, le système électronique étant conçu pour attribuer l'influence inductive à une température de fluide.

11. Soupape de régulation (1) selon l'une des revendications 6 à 10, le circuit de détection (37) comportant en outre une bobine de détection (31) avec laquelle la résistance sensible à la température (29) est montée en série.

12. Soupape de régulation (1) selon l'une des revendications 6 à 11, la bobine de détection (31) étant couplée de manière inductive à l'actionneur électromagnétique, en particulier à une bobine principale (39) de l'actionneur électromagnétique, de telle sorte que sa puissance et/ou sa consommation d'énergie varie.

13. Soupape de régulation (1) selon l'une des revendications 6 à 12, le système électronique étant conçu pour détecter la variation de puissance et/ou de consommation d'énergie de l'actionneur électromagnétique, en particulier d'une bobine principale (39) de l'actionneur électromagnétique, et pour l'attribuer à une température de fluide.

14. Soupape de régulation (1) selon l'une des revendications 6 à 13, le système électronique étant conçu pour surveiller la température du fluide et/ou étant couplé à un système électronique de surveillance.
